# EUROPEAN PATENT SPECIFICATION

(11) **EP 0 400 141 B1**
(45) Date of publication and mention of the grant of the patent: **06.09.1995**
(21) Application number: 90901300.5
(22) Date of filing: 04.12.1989
(51) Int. Cl.: C09K 5/04, C10M 105/18, C10M 105/38, F25B 15/02, C10N 40/30

(54) **LIQUID COMPOSITIONS CONTAINING CARBOXYLIC ESTERS**
FLÜSSIGE GEMISCHE ENTHALTENDE CARBOXYLISCHE ESTER
COMPOSITIONS LIQUIDES CONTENANT DES ESTERS CARBOXYLIQUES

(30) Priority: 14.12.1988 US 284315
(43) Date of publication of application: 05.12.1990
(73) Proprietor: The Lubrizol Corporation, Wickliffe, Ohio 44092 (US)
(72) Inventor: JOLLEY, Scott, Ted, Mentor, OH 44060 (US); GRAVA, Arturs, Mayfield Heights, OH 44124 (US)
(74) Representative: Crisp, David Norman
(86) International application number: US8905475
(87) International publication number: WO9006979

(56) References cited:
- EP-A- 0 030 127
- EP-A- 0 062 516
- DE-A- 3 202 478
- US-A- 2 040 904
- US-A- 2 040 905
- US-A- 3 894 959
- US-A- 4 455 247
- Patent Abstracts of Japan, vol. 11, no. 80, C409, abstract of JP 61-233087, publ 1986-10-17

## Description

This invention relates to liquid compositions comprising a major amount of a fluorine-containing hydrocarbon, and a minor amount of a lubricant. More particularly, but not exclusively, the invention relates to liquid compositions useful as refrigeration liquids.

Chlorofluorocarbons, generally referred to in the industry as CFCs, have been widely used as propellants in aerosols, although use in aerosols has been diminishing in recent years because of demands of environmentalists for the reduction if not a complete ban on the use of CFCs because of the detrimental effect of CFCs on the atmosphere's ozone layer. CFCs also have been used because of their unique combination of properties as refrigerants, foam-blowing agents, and specialty solvents within the electronics and aerospace industries. Examples of CFCs which have been utilized for these purposes include CFC-11 which is chlorotrifluoromethane, CFC-12 which is dichlorodifluoromethane, and CFC-113 which is 1,2,2-trifluoro-1,1,2-trichloroethane.

Since 1976, when the aerosol industry began to feel the pressure to reduce if not eliminate the use of CFCs, the aerosol industry has progressively moved toward the substitution of hydrocarbon propellants for CFC propellants. The hydrocarbons, such as butane, are readily available and inexpensive, and the quality of the final product generally has been unaffected by the substitution of propellants. However, the problem of finding a safe replacement of CFC refrigerants and foam-blowing agents has been more difficult to solve. Several replacement candidates have been suggested as alternatives to the fully halogenated hydrocarbons, and these include halogenated hydrocarbons containing at least some hydrogen atoms such as HCFC-22 which is difluorochloromethane, HCFC-123 which is 1,1-dichloro-2,2,2-trifluoroethane, HFC-134a which is 1,1,1,2-tetrafluoroethane and HCFC-141b which is 1,1-dichloro-1-fluoroethane.

The ozone depletion potential of these proposed substitutes is significantly less than the ozone depletion potential of the previously used CFCs. The ozone depletion potential is a relative measure of the capability of the material to destroy the ozone layer in the atmosphere. It is a combination of the percentage by weight of chlorine (the atom that attacks the ozone molecule) and the lifetime in the atmosphere. HCFC-22 and HFC-134a generally are recommended as being candidates in refrigerant applications, and HFC-134a is particularly attractive because its ozone depletion potential has been reported as being zero.

In order for any of the replacement materials to be useful as refrigerants, the materials must be compatible with the lubricant utilized in the compressor. The presently used refrigerants such as CFC-12 are readily compatible with mineral lubricating oils which are utilized as the lubricant in air-conditioner compressors. The above-described refrigerant candidates, however, have different solubility characteristics than the refrigerants presently in use. For example, mineral lubricating oil is incompatible (i.e., insoluble) with HFC-134a. Such incompatibility results in unacceptable compressor life in compression-type refrigeration equipment including refrigerators and air-conditioners including auto, home and industrial air-conditioners. The problem is particularly evident in automotive air-conditioning systems since the compressors are not separately lubricated, and a mixture of refrigerant and lubricant circulates throughout the entire system.

In order to perform as a satisfactory refrigeration liquid, the mixture of refrigerant and lubricant must be compatible and stable over a wide temperature range such as from about 0°C and above 80°C. It is generally desirable for the lubricants to be soluble in the refrigerant at concentrations of about 5 to 15% over a temperature range of from -40°C to 80°C. These temperatures generally correspond to the working temperatures of an automobile air-conditioning compressor. In addition to thermal stability, the refrigeration liquids must have acceptable viscosity characteristics which are retained even at high temperatures, and the refrigeration liquid should not have a detrimental effect on materials used as seals in the compressors.

Compositions comprising a tetrafluoroethane and polyoxyalkylene glycols are discussed in U.S. Patent 4,755,316. The compositions are useful in refrigeration systems. Refrigeration oils are described in U.S. Patents 4,248,726 and 4,267,064 which comprise mixtures of a polyglycol and 0.1 to 10% of glycidyl ether type epoxy compounds, or epoxidized fatty acid monoesters, and optionally, epoxidized vegetable oil. The lubricating oils are reported to be useful in refrigerators using a halogen-containing refrigerant such as Freons 11, 12, 13, 22, 113, 114, 500 and 502 (available from DuPont), and in particular with Freon 12 or 22.

U.S. Patent 4,431,557 describes fluid compositions comprised of a fluoro- and chloro-containing refrigerant, a hydrocarbon oil, and an alkylene oxide additive compound which improves the thermal resistance of the oil in the presence of the refrigerant. Examples of hydrocarbon oils include mineral oil, alkyl benzene oil, dibasic acid ester oil, polyglycols, etc. The composition may contain other additives including load-carrying additives such as phosphorus acid esters, phosphoric acid esters, etc. Examples of fluorocarbon refrigerants include R-11, R-12, R-113, R-114, R-500, etc.

U.S. Patent 4,428,854 describes absorption refrigerant compositions for use in refrigeration systems comprising 1,1,1,2-tetrafluoroethane and an organic solvent capable of dissolving the ethane. Among the solvents disclosed are organic amides, acetonitrile, N-methyl pyrroles, N-methyl pyrrolidine, N-methyl-2-pyrrolidone, nitromethane, various dioxane derivatives, glycol ethers, butyl formate, butyl acetate, diethyl oxalate, diethyl malonate, acetone, methyl ethyl ketone, other ketones and aldehydes, triethyl phosphoric triamide, triethylene phosphate, triethyl phosphate, etc.

Stabilized absorption compositions comprising (a) a halogenated hydrocarbon refrigerant, (b) a liquid absorbent of a polyethylene glycol methyl ether, and (c) at least one stabilizer are described in U.S. Patent 4,454,052. Examples of stabilizers include phosphate esters, epoxy compounds, and organotin compounds. The polyethylene glycol methyl ether-type compounds are of the general formula

CH₃-O-(CH₂H₄O)ₙR

wherein n is an integer of 1 to 6, and R is H, CH₃- or CH₃CO-. A variety of halogenated hydrocarbons are described including 1,1,-difluoromethane, 1,1,1,2-tetrafluoroethane, etc.

U.S. Patent 4,559,154 relates to absorption heat pumps utilizing as working fluid, a saturated fluorohydrocarbon or fluorohydrocarbon ether having from 3 to 5 carbon atoms. Solvents reported to be useful with such fluorohydrocarbons include ethers such as tetraglyme, amides which can be lactams such as the N-alkyl pyrrolidones, sulfonamides and ureas including cyclic ureas.

According to the present invention there is provided a liquid composition comprising:
(A) a major amount (50% to 99% by weight) of a fluorine-containing hydrocarbon containing one or two carbon atoms, and containing only carbon, hydrogen and fluorine and
(B) a minor amount of a soluble organic lubricant comprising at least one carboxylic ester compound characterized by the formulae

   RO(R¹O)ₙC(O)R² (I)

   and

   R³OC(O)R² (II)

   wherein R is a hydrocarbyl group containing from 6 to 50 carbon atoms,
   R¹ is a hydrocarbylene group containing from 1 to 7 carbon atoms,
   R² is H, hydrocarbyl containing from 1 to 20 carbon atoms, -CF₃, -R⁴CN, -R⁴- NO₂, or R⁵OCH(R⁶)-,
   R³ is a -R⁴CF₃, -R⁴CN or -R⁴NO₂ group, provided that R³ may be a hydrocarbyl group containing from 1 to 20 carbon atoms when R² is -R⁴CN,
   n is an integer from 1 to 50,
   R⁴ is a hydrocarbylene group containing from 1 to 20 carbon atoms,
   R⁵ is H, a hydrocarbyl group containing from 1 to 7 carbon atoms or R⁷C(O)- where R⁷ is a hydrocarbyl group containing from 1 to 20 carbon atoms, and
   R⁶ is H or a hydrocarbyl group containing from 1 to 7 carbon atoms. The lubricants are preferably free of acetylenic and aromatic unsaturation. The liquid compositions are useful particularly as refrigeration liquids in refrigerators and air-conditioners including auto, home and industrial air-conditioners.

Various preferred features and embodiments of the present invention will now be described by way of non-limiting example.

Throughout this specification and claims, all parts and percentages are by weight, temperatures are in degrees Celsius, and pressures are at or near atmospheric unless otherwise clearly indicated.

As used in this specification and in the appended claims, the terms "hydrocarbyl" and "hydrocarbylene" denote a group having a carbon atom directly attached to the polar group and having a hydrocarbon or predominantly hydrocarbon character within the context of this invention. Such groups include the following:
(1) Hydrocarbon groups; that is, aliphatic, (e.g., alkyl or alkenyl), alicyclic (e.g., cycloalkyl or cycloalkenyl), and the like, as well as cyclic groups wherein the ring is completed through another portion of the molecule (that is, any two indicated substituents may together form an alicyclic group). Such groups are known to those skilled in the art. Examples include methyl, ethyl, octyl, decyl, octadecyl, cyclohexyl, etc.
(2) Substituted hydrocarbon groups; that is, groups containing non-hydrocarbon substituents which, in the context of this invention, do not alter the predominantly hydrocarbon character of the group. Those skilled in the art will be aware of suitable substituents. Examples include halo, hydroxy, alkoxy, etc.
(3) Hetero groups; that is, groups which, while predominantly hydrocarbon in character within the context of this invention, contain atoms other than carbon in a chain or ring otherwise composed of carbon atoms. Suitable hetero atoms will be apparent to those skilled in the art and include, for example, nitrogen, oxygen and sulfur.

In general, no more than about three substituents or hetero atoms, and preferably no more than one, will be present for each 10 carbon atoms in the hydrocarbyl group.

Terms such as "alkyl", "alkylene", etc. have meanings analogous to the above with respect to hydrocarbyl and hydrocarbylene.

The term "hydrocarbon-based" also has the same meaning and can be used interchangeably with the term hydrocarbyl when referring to molecular groups having a carbon atom attached directly to the polar group.

The term "lower" as used herein in conjunction with terms such as hydrocarbyl, alkyl, alkenyl, alkoxy, and the like, is intended to describe such groups which contain a total of up to 7 carbon atoms.

### (A) Fluorine-Containing Hydrocarbon.

The liquid compositions of the present invention comprise a major amount of a fluorine-containing hydrocarbon. That is, the fluorine-containing hydrocarbons contain at least one C-H bond as well as C-F bonds.

Because the liquid compositions of the present invention are primarily intended for use as refrigerants, the fluorine-containing hydrocarbon contains one or two carbon atoms, and preferably two carbon atoms.

The hydrocarbon contains only carbon, hydrogen and fluorine. These compounds containing only carbon, hydrogen and fluorine are referred to herein as fluorohydrocarbons.

The fluorine-containing hydrocarbons useful in the composition of the present invention are to be distinguished from the fully halogenated hydrocarbons which have been and are being used as propellants, refrigerants and blowing agents such as CFC-11, CFC-12 and CFC-113 which have been described in the background.

A specific example of a fluorine-containing hydrocarbon useful in the liquid compositions of the present invention, and its reported ozone depletion potentials is shown in the following Table I.

**TABLE I**

| Compound Designation | Formula | ODP* |
|---|---|---|
| HFC-134a | CH₂FCF₃ | 0 |

| | | |
|---|---|---|
| * Ozone depletion potential as reported in Process Engineering, pp. 33-34, July, 1988. | | |

Examples of other fluorine-containing hydrocarbons which may be useful in the liquid compositions of the present invention include trifluoromethane, 1,1,1-trifluoroethane, 1,1-difluoroethane, and 1,1,2,2-tetrafluoroethane.

In general, fluorine-containing hydrocarbons which are useful as refrigerants are fluoromethanes and fluoroethanes boiling at a relatively low temperature at atmospheric pressure, e.g., below 30°C. The useful fluorocarbon refrigerants serve to transfer heat in a refrigeration system by evaporating and absorbing heat at a low temperature and pressure, e.g., at ambient temperature and atmospheric pressure, and by releasing heat on condensing at a higher temperature and pressure.

The liquid compositions of the present invention contain a major amount of the fluorine-containing hydrocarbon, i.e. the liquid compositions will comprise from 50% to 99% by weight of the fluorine-containing hydrocarbon. In another embodiment, the liquid compositions contain from 70% to 99% by weight of the fluorine-containing hydrocarbon.

### (B) Soluble Organic Lubricant:

In addition to the fluorine-containing hydrocarbon, the liquid compositions of the present invention contain a minor amount of a soluble organic lubricant which is preferably free of acetylenic and aromatic unsaturation and comprises at least one carboxylic ester compound characterized by the following formulae

RO(R¹O)ₙC(O)R² (I)

and

R³OC(O)R² (II)

wherein R is a hydrocarbyl group containing from 6 to 50 carbon atoms,
R¹ is a hydrocarbylene group containing from 1 to 7 carbon atoms,
R² is H, hydrocarbyl containing from 1 to 20 carbon atoms, -CF₃, -R⁴CN, -R⁴- NO₂, or R⁵OCH(R⁶)-,
R³ is a -R⁴CF₃, -R⁴CN or -R⁴NO₂ group, provided that R³ may be a hydrocarbyl group containing from 1 to 20 carbon atoms when R² is -R⁴CN,
n is an integer from 1 to 50,
R⁴ is a hydrocarbylene group containing from 1 to 20 carbon atoms,
R⁵ is H, a hydrocarbyl group containing from 1 to 7 carbon atoms or R⁷C(O)- where R⁷ is a hydrocarbyl group containing from 1 to 20 carbon atoms, and
R⁶ is H or a hydrocarbyl group containing from 1 to 7 carbon atoms.

In the above Formulae I and II, R is a hydrocarbyl group, more particularly an alkyl group containing from 6 to 50 carbon atoms. Branched-chain alkyl groups are particularly useful as R groups since the presence of the branching appears to improve the solubility of the lubricant in the fluorine-containing hydrocarbon. Examples of R groups include octyl, decyl, dodecyl, tridecyl, hexadecyl, octadecyl, higher alkyl groups, and mixtures of one or more of these. R¹ is a hydrocarbylene group containing from 1 to 7 carbon atoms. Alkylene groups such as methylene, ethylene, propylene, 2-methyl ethylene, 2-ethyl ethylene, etc., are examples of hydrocarbylene groups useful as R¹. When R² is a hydrocarbyl group, R² contains from 1 to 20 carbon atoms and more often will be a lower alkyl group such as methyl, ethyl, propyl, butyl, etc.

R² in Formulae I and II also may be hydrogen, -CF₃, -R⁴CN, -R⁴NO₂ or R⁵OCH(R⁶)- wherein R⁴ is a hydrocarbylene group containing from 1 to 20 carbon atoms, preferably an alkylene group, R⁵ is a lower hydrocarbyl group or R⁷C(O)-wherein R⁷ is a hydrocarbyl group, and R⁶ is H or a lower hydrocarbyl group. The hydrocarbylene group R⁴, in one embodiment, is an alkylene group which may be straight chain or branched chain. R⁵ may be a lower hydrocarbyl group, and specific examples of such groups include methyl, ethyl, propyl, etc. R⁷ is a hydrocarbyl group which contains from 1 to 20 carbon atoms, and in one embodiment this hydrocarbyl group also is a lower hydrocarbyl group.

The compositions represented by Formula I may be prepared by techniques well known in the art. In one embodiment, esters of the type represented by Formula I are prepared by the reaction of a carboxylic acid R²COOH (or its anhydride) with an alkoxy alcohol such as represented by the formula

RO(R¹O)ₙH (III)

wherein R, R¹ and n are as defined above with respect to Formula I. In one embodiment, R¹ is a branched-chain hydrocarbylene group containing 3, 4, or 5 carbon atoms. For example R¹ may be a methyl- or ethyl-substituted ethylene group derived from propylene oxide or butylene oxide.

The carboxylic acid, R²COOH, which may be reacted with the alkoxy alcohol (III) can be any of the carboxylic acids wherein R² is H, hydrocarbyl, -CF₃, -R⁴CN, -R⁴NO₂, or R⁵OCH(R⁶)- wherein R⁴, R⁵ and R⁶ are as defined above with respect to Formulae I and II. The following examples will illustrate the various types of carboxylic acids exemplified by the formula R²COOH and some anhydrides of such acids: formic acid, acetic acid, acetic anhydride, propionic acid, trifluoroacetic acid, trifluoroacetic acid anhydride, cyanoacetic acid, cyanoundecanoic acid, nitroacetic acid, 3-nitropropionic acid, glycolic acid, lactic acid, methoxyacetic acid, ethoxyacetic acid, acetylacetic acid, etc.

A variety of alkoxy alcohols of the type represented by the above Formula III are known in the art, and many are available commercially. The alkoxy alcohols are produced generally by treating an aliphatic alcohol such as a fatty alcohol with an excess of an alkylene oxide such as ethylene oxide or propylene oxide. For example, from 6 to 40 moles of ethylene oxide or propylene oxide may be condensed with the aliphatic alcohol.

In one embodiment, the aliphatic alcohol contains from 14 to 24 carbon atoms and may be derived from long chain fatty alcohols such as oleyl alcohol or stearyl alcohol.

The alkoxy alcohols useful in the reaction with the carboxylic acids or anhydrides to prepare esters of the type represented by Formula I are available commercially under such trade names as "TRITON®" from Rohm & Haas Company, "TERGITOL®" from Union Carbide, "ALFONIC®" from Conoco Chemicals Company, and "NEODOL®" from Shell Chemical Company. The TRITON® materials are identified generally as polyethoxylated alcohols which may be derived from straight chain or branched chain alcohols. The TERGITOLS® are identified as polyethylene glycol ethers of primary or secondary alcohols; the ALFONIC® materials are identified as ethoxylated linear alcohols which may be represented by the general structural formula

CH₃(CH₂)ₓCH₂(OCH₂CH₂)ₙOH (IV)

wherein x varies between 4 and 16 and n is a number between 3 and 11. Specific examples of ALFONIC® ethoxylates characterized by the above formula include ALFONIC® 1012-60 wherein x is 8 to 10 and n is an average of about 5.7; ALFONIC® 1214-70 wherein x is 10-12 and n is an average of about 10.6; ALFONIC® 1412-60 wherein x is from 10-12 and n is an average of about 7; and ALFONIC® 1218-70 wherein x is 10-16 and n is an average of about 10.7.

The NEODOL® ethoxylates are ethoxylated alcohols wherein the alcohols are a mixture of alcohols containing from 12 to 15 carbon atoms, and the alcohols are branched chain primary alcohols. The ethoxylates are obtained by reacting the alcohols with an excess of ethylene oxide such as from 3 to 12 or more moles of ethylene oxide per mole of alcohol. For example, NEODOL® ethoxylate 23-6.5 is a branched chain alcoholate of 12 to 13 carbon atoms with an average of about 6.5 ethoxy units.

The lubricants (B) utilized in the liquid composition of the present invention also may be characterized by the following formula

R³OC(O)R² (II)

wherein R² is H, hydrocarbyl containing from 1 to 20 carbon atoms, -CF₃, -R⁴CN, -R⁴NO₂ or R⁵OCH(R⁶)-, and R³ is a -R⁴CF₃, -R⁴CN or -R⁴NO₂ group wherein R⁴, R⁵ and R⁶ are as defined in Formula I, provided that R³ may be a hydrocarbyl group containing 1 to 20 atoms when R² is -R⁴CN. Such carboxylic esters can be prepared by techniques known in the art such as, for example, by the reaction of a carboxylic acid, R²COOH, as described above, or the anhydride of said acid with hydroxy-containing compounds such as the following:

R³OH (V)

HOR⁴CN (VI)

HOR⁴NO₂ (VII)

HOR⁴CF₃ (VIII)

wherein R⁴ is a hydrocarbylene group containing from 1 to 20 carbon atoms. In one embodiment, R⁴ is a straight chain or branched chain alkylene group, containing, more particularly, from 1 to 10 carbon atoms.

As noted above, R³ in Formula II may be a hydrocarbyl group when R² is -R⁴CN. The hydrocarbyl contains from 1 to 20 or more carbon atoms and is preferably a branched-chain alkyl group containing from 3 to 20 carbon atoms. Esters characterized by Formula II and R³ as a hydrocarbyl group are prepared by reacting the carboxylic acid (R²COOH) or its anhydride with an alcohol R³OH wherein R³ is as defined above. Examples of useful- alcohols include methyl alcohol, ethyl alcohol, amyl alcohol, octyl alcohol, isooctyl alcohol, decyl alcohol, isodecyl alcohol, tridecyl alcohol, octadecyl alcohol, etc.

The hydroxy compound reacted with the carboxylic acid or anhydride also may be characterized by the formula HOR⁴CN wherein R⁴ is a hydrocarbylene group containing 1 to 20 carbon atoms. Specific examples of such hydroxy-containing compounds include 2-cyanoethanol, 2-cyano-1-propanol, etc. Examples of hydroxy compounds characterized by the formula HOR⁴NO₂ which can be reacted with the acid or anhydride compounds include 2-nitro ethanol; 2-methyl-2-nitropropanol, 3-nitro-2-butanol; 2-nitro-1-propanol; 3-nitro-2-pentanol; etc. Examples of hydroxy compounds characterized by the formula HOCH₂CF₃ include 2,2,2-trifluoroethanol; 1,1,1-trifluoro-2-propanol; 2-trifluoromethyl-2-propanol; etc.

The carboxylic ester compounds of the present invention characterized Formulae I and II can be prepared by reacting a carboxylic acid (R²COOH) or its anhydride with any of the above-described hydroxy-containing compounds. Generally, about equivalent amounts of the acid or anhydride and the hydroxy-containing compounds are utilized in the reaction which is a typical esterification reaction. Although no catalyst is required for the anhydrides, the esterification reaction with carboxylic acid generally is acid catalyzed. Typically, about 1% by weight of an acid catalyst such as a mineral acid or para-toluene sulfonic acid is utilized in the reaction mixture. The mixture is heated and stirred while removing water when the free acids are used and, optionally excess carboxylic acid. The reaction may be conducted in the presence of solvent such as hydrocarbon solvents including toluene, xylene, etc.

The following examples illustrate the preparation of the carboxylic esters useful in the present invention.

### Example 1

Into a reaction vessel there are charged 244 parts of Neodol 23-6.5, and the contents of the vessel are heated to 90°C while blowing nitrogen through the liquid. Dropwise addition of 51 parts of acetic anhydride is begun, and the addition requires about 0.5 hour. An additional 5 parts of acetic anhydride are charged to the reaction mixture and the mixture is heated to 100°C. This procedure is repeated twice and the mixture is then maintained at about 100°C for 2 hours whereupon the mixture is stripped to 135°C at 30 mm.Hg. The residue is filtered through a mixture containing about 10 parts of filter aid and about 3 parts of calcium hydroxide. The filtrate is the desired product.

### Example 2

A mixture of 630 parts (1 equivalent) of Alfonic 1412-60, about 75 parts (about 1.0 equivalent) of formic acid, about 50 parts of toluene and 2 parts of para-toluene sulfonic acid is prepared and heated to 110°C with stirring. Azeotropic water is collected over 8 hours, and the reaction mixture then is stripped to 100°C. The residue is filtered, and the filtrate is the desired ester.

### Example 3

A mixture of 133 parts (0.287 mole) of Alfonic 1012-60, 20 parts (0.33 mole) of acetic acid, about 50 parts of toluene and 5 parts of an acidified clay is prepared and heated to reflux. The mixture is maintained at the reflux temperature for about 12 hours. Sulfuric acid (2 parts) is added and the reaction is carried out for an additional 8 hours while removing water. The residue is filtered, and the filtrate is stripped at reduced pressure to yield a light amber oil which is the desired product.

### Example 4

Alfonic 1412-60 (127 parts, 0.25 mole) is charged to a reaction vessel, and 53 parts (0.26 mole) of trifluoroacetic acid are then added. An exothermic reaction results which raises the temperature to about 72°C. The mixture then is heated to about 110°C for 1 hour and stripped under vacuum at 70°C for about 1.5 hours. The residue is the desired product.

### Example 5

A mixture of 170 parts (2 moles) of cyanoacetic acid, 400 parts (2 moles) of tridecyl alcohol and 10 parts of a sulfuric acid treated clay is prepared, and the mixture is heated to about 150°C. Water is evolved very quickly and removed. The reaction mixture is cooled to 120°C and maintained at this temperature for 6 hours. The product, after cooling, is filtered, and the filtrate is the desired product.

### Example 6

A mixture of 577 parts (1 mole) of SandoPan DTC (carboxylic acid of the general structure R(OCH₂ CH₂)ₙOCH₂COOH where R is an aliphatic and n is an integer of from 1 to about 10), 119 parts (1 mole) of 2-methyl-2-nitropropanol and 10 parts of Amberlyst 15 catalyst is prepared and the temperature of the mixture is elevated. Water is evolved and removed from the reaction mixture. Maximum reaction temperature of 140°C is attained as the water is removed. The residue is the desired product.

### Example 7

A mixture of 516 parts (3 moles) of decanoic acid and 357 parts (3 moles) of 2-methyl-2-nitropropanol is prepared, and the mixture is heated to about 150°C. Water is removed as it evolves. When all the water is removed, the reaction mixture is filtered, and the filtrate is the desired product.

Other esters of the type represented by Formulae I and II can be prepared by procedures similar to the procedures in Examples 1-5 involving the reaction of a carboxylic acid R²COOH and the hydroxy-containing compounds represented by Formulae III-VIII. Specific examples of acids and hydroxy-containing compounds which can be reacted to form the desired esters of this invention are illustrated in Table I.

**TABLE I**

| Example | R²COOH | Hydroxy Compound |
|---|---|---|
| 8 | CH₃OCH₂COOH | HOCH₂CN |
| 9 | O₂NCH₂CH₂COOH | HOCH₂CF₃ |
| 10 | HOCH₂COOH | HOC(CH₃)₂CF₃ |
| 11 | HOCH(CH₃)COOH | HOCH₂CH₂NO₂ |
| 12 | CH₃OCH₂COOH | Neodol 23-6.5 |
| 13 | CF₃COOH | HOCH₂CF₃ |
| 14 | HOCH₂COOH | Neodol 23-6.5 |

The organic lubricants characterized by Formulae I and II preferably are free of acetylenic and aromatic unsaturation. Some compounds of Formulae I and II which contain such unsaturation are insoluble in the fluorine-containing hydrocarbons and are, in particular, in 1,1,1,2-tetrafluoroethane. The soluble lubricants of this invention also are preferably free of olefinic unsaturation except that some olefinic unsaturation may be present so long as the lubricant is soluble.

The carboxylic ester lubricants are soluble in the fluorine-containing hydrocarbons and, in particular, in the fluorohydrocarbons such as 1,1,1,2-tetrafluoroethane. The lubricants are soluble over a wide temperature range and, in particular, at low temperatures. The solubility of the lubricants in fluorohydrocarbons such as 1,1,1,2-tetrafluoroethane at low temperatures is determined in the following manner. The lubricant (0.5 gram) is placed in a thick-walled glass vessel equipped with a removable pressure gauge. The tetrafluoroethane (4.5 grams) is condensed into the cooled (-40°C) glass vessel, and the contents are warmed to the desired temperature and mixed to determine if the lubricant is soluble in the tetrafluoroethane. If soluble, the temperature of the mixture is reduced until a separation and/or precipitate is observed. The results of this solubility test conducted with several examples of the carboxylic ester lubricants of the present invention are summarized in the following Table II.

**TABLE II**

| Liquid Containing Product of Example | Solubility °C (ppt.) |
|---|---|
| 2 | -15 |
| 3 | -20 |
| 4 | -20 |
| 5 | -15 |

The liquid compositions of the present invention comprise a major amount of a fluorine-containing hydrocarbon and a minor amount of at least one soluble organic lubricant comprising at least one carboxylic ester of the types described above with respect to Formulae I and II. By "major amount" is meant an amount greater than 50% by weight such as 50.5%, 70%, 99%, etc. The term "minor amount" includes amounts less than 50% by weight such as 1%, 5%, 20%, 30% and up to 49.9%. In one embodiment, the liquid compositions of the present invention will comprise from about 70 to about 99% of the fluorine-containing hydrocarbon and from about 1 to about 30% by weight of the lubricant. In other embodiments, the liquid compositions of the present invention may contain from about 5 to about 20% by weight of the lubricant.

The liquid compositions of the present invention are characterized as having improved thermal and chemical stability over a wide temperature range. Other additives, if soluble in the liquid, known to be useful for improving the properties of halogen-containing hydrocarbon refrigerants can be included in the liquid compositions of the present invention to improve the characteristics of the liquid as a refrigerant. However, hydrocarbon oils such as mineral oil generally are not included in and are most often excluded from the liquid compositions of the invention, particularly when the fluorine-containing hydrocarbon contains no other halogen. Polyglycols and alkyl ethers which have been suggested in the prior art as useful solvents for fluorine-containing hydrocarbons are not required in the liquid compositions of the present invention and are generally omitted from the liquid compositions.

The additives which may be included in the liquid compositions of the present invention to enhance the performance of the liquids include extreme-pressure and anti-wear agents, oxidation and thermal-stability improvers, corrosion-inhibitors, viscosity-index improvers, pour point and/or floc point depressants, detergents, dispersants, anti-foaming agents, viscosity adjusters, etc. As noted above, these supplementary additives must be soluble in the liquid compositions of the invention. Included among the materials which may be used as extreme-pressure and anti-wear agents are phosphates, phosphate esters, phosphites, thiophosphates such as zinc diorganodithiophosphates_{,} dithiocarbamates, chlorinated waxes, sulfurized fats and olefins, organic lead compounds, fatty acids, molybdenum complexes, borates, halogen-substituted phosphorous compounds, sulfurized Diels Alder adducts, organic sulfides, metal salts of organic acids, etc. Stearically hindered phenols, aromatic amines, dithiophosphates, phosphites, sulfides and metal salts of dithioacids are useful examples of oxidation and thermal stability improvers. Compounds useful as corrosion-inhibitors include organic acids, organic amines, organic phosphates, organic alcohols, metal sulfonates, organic phosphites, etc. VI improvers include polyolefins such as polyesterbutene, polymethacrylate, polyalkyl styrenes, etc. Pour point and floc point depressants include polymethacrylates, ethylenevinyl acetate copolymers, succinamic acid-olefin copolymers, ethylene-alpha olefin copolymers, etc. Detergents include sulfonates, long-chain alkyl-substituted aromatic sulfonic acids, phosphonates, phenylates, metal salts of alkyl phenols, alkyl phenol-aldehyde condensation products, metal salts of substituted salicylates, etc. Silicone polymers are a well known type of antifoam agent. Viscosity adjusters are exemplified by polyisobutylene, polymethacrylates, polyalkyl styrenes, naphthenic oils, alkyl benzene oils, polyesters, polyvinyl chloride, polyphosphates, etc.

The liquid compositions of the present invention are particularly useful as refrigerants in various refrigeration systems which are compression-type systems such as refrigerators, freezers, and air-conditioners including automotive, home and industrial air-conditioners. The following examples are illustrative of the liquid compositions of the present invention.

| | Parts by Wt. |
|---|---|
| Example A | |
| 1,1,1,2-tetrafluoroethane (R134a) | 90 |
| Lubricant of Example 2 | 10 |

| Example B | |
|---|---|
| 1,1,2,2-tetrafluoroethane | 85 |
| Lubricant of Example 4 | 15 |

| Example C | |
|---|---|
| R-134a | 95 |
| Lubricant of Example 5 | 5 |

| Example D | |
|---|---|
| R134a | 80 |
| Product of Example 1 | 20 |

| Example E | |
|---|---|
| R134a | 85 |
| Product of Example 4 | 15 |

## Claims (Claims for the following Contracting State(s): AT, BE, CH, DE, FR, GB, IT, LI, LU, NL, SE)

1. A liquid composition comprising:
(A) a major amount (50% to 99% by weight) of a fluorine-containing hydrocarbon containing one or two carbon atoms, and containing only carbon, hydrogen and fluorine and
(B) a minor amount of a soluble organic lubricant comprising at least one carboxylic ester compound characterized by the formulae
RO(R¹O)ₙC(O)R² (I)
and
R³OC(O)R² (II)
wherein R is a hydrocarbyl group containing from 6 to 50 carbon atoms,
R¹ is a hydrocarbylene group containing from 1 to 7 carbon atoms,
R² is H, hydrocarbyl containing from 1 to 20 carbon atoms, -CF₃, -R⁴CN, -R⁴- NO₂, or R⁵OCH(R⁶)-,
R³ is a -R⁴CF₃, -R⁴CN or -R⁴NO₂ group, provided that R³ may be a hydrocarbyl group containing from 1 to 20 carbon atoms when R² is -R⁴CN,
n is an integer from 1 to 50,
R⁴ is a hydrocarbylene group containing from 1 to 20 carbon atoms,
R⁵ is H, a hydrocarbyl group containing from 1 to 7 carbon atoms or R⁷C(O)- where R⁷ is a hydrocarbyl group containing from 1 to 20 carbon atoms, and
R⁶ is H or a hydrocarbyl group containing from 1 to 7 carbon atoms.

2. A liquid composition of claim 1 comprising from 70 to 99% by weight of the fluorine-containing hydrocarbon (A) and from 1 to 30% by weight of the soluble organic lubricant (B).

3. A liquid composition of claim 1 comprising from 70 to 99% by weight of the fluorine-containing hydrocarbon (A), wherein (A) contains two carbon atoms, and
from 1 to 30% by weight of the soluble organic lubricant (B).

4. A liquid composition of any preceding claim wherein the fluorohydrocarbon (A) is 1,1,1,2-tetrafluoroethane.

5. A liquid composition of any preceding claim wherein the lubricant (B) is characterized by Formula I and R² is an alkyl group.

6. A liquid composition of any one of claims 1 to 4 wherein the lubricant is characterized by Formula I and R² is characterized by the formula R⁵OCH₂- wherein R⁵ is a alkyl group containing from 1 to 7 carbon atoms, or R⁷C(O)- where R⁷ is a alkyl group containing from 1 to 7 carbon atoms.

7. A liquid composition of any one of claims 1 to 4 wherein the lubricant is characterized by Formula I and R² is -CF₃.

8. A liquid composition of any one of claims 1 to 4 wherein the lubricant (B) is characterized by Formula II.

9. A liquid composition of claim 8 wherein R² is H or a alkyl group containing from 1 to 7 carbon atoms.

10. A liquid composition of claim 8 wherein R² is -R⁴CN and R³ is a hydrocarbyl group.

11. A liquid composition of any preceding claim wherein the lubricant is free of acetylenic and aromatic unsaturation.

12. A liquid composition comprising
(A) from 70 to 99% by weight of 1,1,1,2-tetrafluoroethane, and
(B) from 1 to 30% by weight of a soluble organic lubricant free of acetylenic and aromatic unsaturation and comprising at least one carboxylic ester compound characterized by the formula
RO(R¹O)ₙC(O)R² (I)
wherein R is a hydrocarbyl group containing from 1 to 20 carbon atoms,
R¹ is an alkylene group containing from 1 to 3 carbon atoms,
R² is hydrogen, an alkyl group containing from 1 to 7 carbon atoms, an alkoxy methylene group, or -R⁴CN, wherein R⁴ is an alkylene group containing from 1 to 20 carbon atoms, and
n is an integer of 1 to 20.

13. A liquid composition of claim 12 wherein R² is H or a alkyl group containing from 1 to 7 carbon atoms.

14. A liquid composition of claim 12 wherein R² is -CF₃.

15. A liquid composition of any one of claims 12 to 14 wherein R¹ is a methylene or ethylene group.

16. A liquid composition of any one of claims 12 to 14 wherein the hydrocarbyl group R and/or the hydrocarbylene group R¹ are branched-chain alkyl groups and/or branched-chain alkylene groups.

17. A liquid composition comprising
(A) from 70% to 99% by weight of 1,1,1,2-tetrafluoroethane, and
(B) from 1 to 30% by weight of at least one carboxylic ester compound characterized by the formula
R³OC(O)R² (II)
wherein R² is H, an alkyl group containing from 1 to 10 carbon atoms, a lower alkoxymethylene group, -CF₃, -R⁴NO₂, R⁷C(O)OCH₂-, or -R⁴CN, and
R³ is a -R⁴CF₃, -R⁴CN or -R⁴NO₂ group wherein R⁴ is an alkylene group containing from 1 to 10 carbon atoms, and R⁷ is a hydrocarbyl group containing from 1 to 20 carbon atoms.

18. A liquid composition of claim 17 wherein R² is H or a alkyl group containing from 1 to 7 carbon atoms.

19. A liquid composition of claim 17 wherein R² is CF₃.

20. A liquid composition of any one of claims 17 to 19 wherein R³ is -R⁴CN or R⁴NO₂ wherein R⁴ is a branched alkylene group.

21. A liquid composition of claim 17 wherein the alkyl group R² and the alkylene group R⁴ are branched-chain alkyl or branched-chain alkylene groups.

## Claims (Claims for the following Contracting State(s): ES)

1. A method for preparing a liquid composition comprising:
(A) a major amount (50% to 99% by weight) of a fluorine-containing hydrocarbon containing one or two carbon atoms, and containing only carbon, hydrogen and fluorine and
(B) a minor amount of a soluble organic lubricant comprising at least one carboxylic ester compound characterized by the formulae
RO(R¹O)ₙC(O)R² (I)
and
R³OC(O)R² (II)
wherein R is a hydrocarbyl group containing from 6 to 50 carbon atoms,
R¹ is a hydrocarbylene group containing from 1 to 7 carbon atoms,
R² is H, hydrocarbyl containing from 1 to 20 carbon atoms, -CF₃, -R⁴CN, -R⁴- NO₂, or R⁵OCH(R⁶)-,
R³ is a -R⁴CF₃, -R⁴CN or -R⁴NO₂ group, provided that R³ may be a hydrocarbyl group containing from 1 to 20 carbon atoms when R² is -R⁴CN,
n is an integer from 1 to 50,
R⁴ is a hydrocarbylene group containing from 1 to 20 carbon atoms,
R⁵ is H, a hydrocarbyl group containing from 1 to 7 carbon atoms or R⁷C(O)- where R⁷ is a hydrocarbyl group containing from 1 to 20 carbon atoms, and
R⁶ is H or a hydrocarbyl group containing from 1 to 7 carbon atoms, comprising mixing (A) and (B).

2. A method of claim 1 wherein the liquid composition comprises from 70 to 99% by weight of the fluorine-containing hydrocarbon (A) and from 1 to 30% by weight of the soluble organic lubricant (B).

3. A method of claim 1 wherein the liquid composition comprises containing from 70 to 99% by weight of the fluorine-containing hydrocarbon (A), wherein (A) contains two carbon atoms, and
from 1 to 30% by weight of the soluble organic lubricant (B).

4. A method of any preceding claim wherein the fluorohydrocarbon (A) is 1,1,1,2-tetrafluoroethane.

5. A method of any preceding claim wherein the lubricant (B) is characterized by Formula I and R² is an alkyl group.

6. A method of any one of claims 1 to 4 wherein the lubricant is characterized by Formula I and R² is characterized by the formula R⁵OCH₂-wherein R⁵ is a alkyl group containing from 1 to 7 carbon atoms, or R⁷C(O)- where R⁷ is a alkyl group containing from 1 to 7 carbon atoms.

7. A method any one of claims 1 to 4 wherein the lubricant is characterized by Formula I and R² is -CF₃.

8. A method of any one of claims 1 to 4 wherein the lubricant (B) is characterized by Formula II.

9. A method of claim 8 wherein R² is H or a alkyl group containing from 1 to 7 carbon atoms.

10. A method of claim 8 wherein R² is -R⁴CN and R³ is a hydrocarbyl group.

11. A method of any preceding claim wherein the lubricant is free of acetylenic and aromatic unsaturation.

12. A method for preparing a liquid composition comprising
(A) from 70 to 99% by weight of 1,1,1,2-tetrafluoroethane, and
(B) from 1 to 30% by weight of a soluble organic lubricant free of acetylenic and aromatic unsaturation and comprising at least one carboxylic ester compound characterized by the formula
RO(R¹O)ₙC(O)R² (I)
wherein R is a hydrocarbyl group containing from 1 to 20 carbon atoms,
R¹ is an alkylene group containing from 1 to 3 carbon atoms,
R² is hydrogen, an alkyl group containing from 1 to 7 carbon atoms, an alkoxy methylene group, or -R⁴CN, wherein R⁴ is an alkylene group containing from 1 to 20 carbon atoms, and
n is an integer of 1 to 20, comprising mixing (A) and (B).

13. A method of claim 12 wherein R² is H or a alkyl group containing from 1 to 7 carbon atoms.

14. A method of claim 12 wherein R² is -CF₃.

15. A method of any one of claims 12 to 14 wherein R¹ is a methylene or ethylene group.

16. A method of any one of claims 12 to 14 wherein the hydrocarbyl group R and/or the hydrocarbylene group R¹ are branched-chain alkyl groups and/or branched-chain alkylene groups.

17. A method for preparing a liquid composition comprising
(A) from 70% to 99% by weight of 1,1,1,2-tetrafluoroethane, and
(B) from 1 to 30% by weight of at least one carboxylic ester compound characterized by the formula
R³OC(O)R² (II)
wherein R² is H, an alkyl group containing from 1 to 10 carbon atoms, a lower alkoxymethylene group, -CF₃, -R⁴NO₂, R⁷C(O)OCH₂-, or -R⁴CN, and
R³ is a -R⁴CF₃, -R⁴CN or -R⁴NO₂ group wherein R⁴ is an alkylene group containing from 1 to 10 carbon atoms, and R⁷ is a hydrocarbyl group containing from 1 to 20 carbon atoms, comprising mixing (A) and (B).

18. A method of claim 17 wherein R² is H or a alkyl group containing from 1 to 7 carbon atoms.

19. A method of claim 17 wherein R² is CF₃.

20. A method of any one of claims 17 to 19 wherein R³ is -R⁴CN or R⁴NO₂ wherein R⁴ is a branched alkylene group.

21. A method of claim 17 wherein the alkyl group R² and the alkylene group R⁴ are branched-chain alkyl or branched-chain alkylene groups.

## Patentansprüche (Patentansprüche für folgende(n) Vertragsstaat(en): AT, BE, CH, DE, FR, GB, IT, LI, LU, NL, SE)

1. Eine flüssige Zusammensetzung, umfassend:
(A) eine Hauptmenge (50 bis 99 Gew.-%) eines fluorhaltigen Kohlenwasserstoffs mit einem oder zwei Kohlenstoffatomen und nur enthaltend Kohlenstoff, Wasserstoff und Fluor, und
(B) eine geringere Menge eines löslichen organischen Schmiermittels, umfassend mindestens eine Carbonsäure-Ester-Verbindung der allgemeinen Formeln
RO(R¹O)ₙC(O)R² (I)
und
R³OC(O)R² (II)
in denen der Rest R ein Hydrocarbylrest mit 6 bis 50 Kohlenstoffatomen ist,
der Rest R¹ ein Hydrocarbylenrest mit 1 bis 7 Kohlenstoffatomen ist,
der Rest R² ein Wasserstoffatom, ein Hydrocarbylrest mit 1 bis 20 Kohlenstoffatomen, -CF₃, -R⁴CN, -R⁴-NO₂ oder R⁵OCH(R⁶)- ist,
der Rest R³ -R⁴CF₃, -R⁴CN oder -R⁴NO₂ ist, mit der Maßgabe, daß R³ ein Hydrocarbylrest mit 1 bis 20 Kohlenstoffatomen sein kann, wenn R² -R⁴CN ist,
n eine ganze Zahl mit einem Wert von 1 bis 50 ist,
der Rest R⁴ ein Hydrocarbylenrest mit 1 bis 20 Kohlenstoffatomen ist,
der Rest R⁵ ein Wasserstoffatom, ein Hydrocarbylrest mit 1 bis 7 Kohlenstoffatomen oder R⁷C(O)- ist, wobei der Rest R⁷ ein Hydrocarbylrest mit 1 bis 20 Kohlenstoffatomen ist, und
der Rest R⁶ ein Wasserstoffatom oder ein Hydrocarbylrest mit 1 bis 7 Kohlenstoffatomen ist.

2. Flüssige Zusammensetzung nach Anspruch 1, umfassend 70 bis 99 Gew.-% des fluorhaltigen Kohlenwasserstoffs (A) und 1 bis 30 Gew.-% des löslichen organischen Schmiermittels (B).

3. Flüssige Zusammensetzung nach Anspruch 1, umfassend 70 bis 99 Gew.-% des fluorhaltigen Kohlenwasserstoffs (A), wobei (A) 2 Kohlenstoffatome hat, und 1 bis 30 Gew.-% des löslichen organischen Schmiermittels (B).

4. Flüssige Zusammensetzung nach einem der vorstehenden Ansprüche, in der der Fluorkohlenwasserstoff (A) 1,1,1,2-Tetrafluorethan ist.

5. Flüssige Zusammensetzung nach einem der vorstehenden Ansprüche, in der das Schmiermittel (B) die allgemeine Formel I hat und R² ein Alkylrest ist.

6. Flüssige Zusammensetzung nach einem der Ansprüche 1 bis 4, in der das Schmiermittel die allgemeine Formel I und R² die allgemeine Formel R⁵OCH₂- hat, in der der Rest R⁵ ein Alkylrest mit 1 bis 7 Kohlenstoffatomen oder R⁷C(O)- ist, wobei der Rest R⁷ ein Alkylrest mit 1 bis 7 Kohlenstoffatomen ist.

7. Flüssige Zusammensetzung nach einem der Ansprüche 1 bis 4, in der das Schmiermittel die allgemeine Formel I hat und der Rest R² -CF₃ ist.

8. Flüssige Zusammensetzung nach einem der Ansprüche 1 bis 4, in der das Schmiermittel (B) die allgemeine Formel II hat.

9. Flüssige Zusammensetzung nach Anspruch 8, in der der Rest R² ein Wasserstoffatom oder ein Alkylrest mit 1 bis 7 Kohlenstoffatomen ist.

10. Flüssige Zusammensetzung nach Anspruch 8, in der der Rest R² - R⁴CN ist und der Rest R³ ein Hydrocarbylrest ist.

11. Flüssige Zusammensetzung nach einem der vorstehenden Ansprüche, in der das Schmiermittel keine acetylenischen und aromatischen Reste hat.

12. Flüssige Zusammensetzung, umfassend
(A) 70 bis 99 Gew.-% 1,1,1,2-Tetrafluorethan, und
(B) 1 bis 30 Gew.-% eines löslichen organischen Schmiermittels ohne acetylenische und aromatische Reste, und umfassend mindestens eine Carbonsäure-Ester-Verbindung der allgemeinen Formel
RO(R¹O)ₙC(O)R² (I)
in der der Rest R ein Hydrocarbylrest mit 1 bis 20 Kohlenstoffatomen, der Rest R¹ ein Alkylenrest mit 1 bis 3 Kohlenstoffatomen, der Rest R² ein Wasserstoffatom, ein Alkylrest mit 1 bis 7 Kohlenstoffatomen, ein Alkoxymethylenrest oder -R⁴CN ist, wobei der Rest R⁴ ein Alkylenrest mit 1 bis 20 Kohlenstoffatomen ist, und n eine ganze Zahl mit einem Wert von 1 bis 20 ist.

13. Flüssige Zusammensetzung nach Anspruch 12, in der R² ein Wasserstoffatom oder ein Alkylrest mit 1 bis 7 Kohlenstoffatomen ist.

14. Flüssige Zusammensetzung nach Anspruch 12, in der der Rest R² -CF₃ ist.

15. Flüssige Zusammensetzung nach einem der Ansprüche 12 bis 14, in der der Rest R¹ ein Methylen- oder Ethylenrest ist.

16. Flüssige Zusammensetzung nach einem der Ansprüche 12 bis 14, in der der Hydrocarbylrest R und/oder der Hydrocarbylenrest R¹ verzweigtkettige Alkylreste und/oder verzweigtkettige Alkylenreste sind.

17. Flüssige Zusammensetzung, umfassend
(A) 70 bis 99 Gew.-% 1,1,1,2-Tetrafluorethan, und
(B) 1 bis 30 Gew.-% mindestens einer Carbonsäure-Ester-Verbindung der allgemeinen Formel
R³OC(O)R² (II)
in der der Rest R² ein Wasserstoffatom, ein Alkylrest mit 1 bis 10 Kohlenstoffatomen, ein niederer Alkoxymethylenrest, -CF₃, -R⁴NO₂, R⁷C(O)OCH₂- oder -R⁴CN ist, und
der Rest R³ -R⁴CF₃, -R⁴CN oder -R⁴NO₂ ist, wobei der Rest R⁴ ein Alkylenrest mit 1 bis 10 Kohlenstoffatomen ist, und der Rest R⁷ ein Hydrocarbylrest mit 1 bis 20 Kohlenstoffatomen ist.

18. Flüssige Zusammensetzung nach Anspruch 17, in der der Rest R² ein Wasserstoffatom oder ein Alkylrest mit 1 bis 7 Kohlenstoffatomen ist.

19. Flüssige Zusammensetzung nach Anspruch 17, in der der Rest R² -CF₃ ist.

20. Flüssige Zusammensetzung nach einem der Ansprüche 17 bis 19, in der der Rest R³ -R⁴CN oder -R⁴NO₂ ist, wobei der Rest R⁴ ein verzweigter Alkylenrest ist.

21. Flüssige Zusammensetzung nach Anspruch 17, in der der Alkylrest R² und der Alkylenrest R⁴ verzweigtkettige Alkyl- oder verzweigtkettige Alkylenreste sind.

## Patentansprüche (Patentansprüche für folgende(n) Vertragsstaat(en): ES)

1. Ein Verfahren zur Herstellung einer flüssigen Zusammensetzung, umfassend:
(A) eine Hauptmenge (50 bis 99 Gew.-%) eines fluorhaltigen Kohlenwasserstoffs mit einem oder zwei Kohlenstoffatomen und nur enthaltend Kohlenstoff, Wasserstoff und Fluor, und
(B) eine geringere Menge eines löslichen organischen Schmiermittels, umfassend mindestens eine Carbonsäure-Ester-Verbindung der allgemeinen Formeln
RO(R¹O)ₙC(O)R² (I)
und
R³OC(O)R² (II)
in denen der Rest R ein Hydrocarbylrest mit 6 bis 50 Kohlenstoffatomen ist,
der Rest R¹ ein Hydrocarbylenrest mit 1 bis 7 Kohlenstoffatomen ist,
der Rest R² ein Wasserstoffatom, ein Hydrocarbylrest mit 1 bis 20 Kohlenstoffatomen, -CF₃, -R⁴CN, -R⁴-NO₂ oder R⁵OCH(R⁶)- ist,
der Rest R³ -R⁴CF₃, -R⁴CN oder -R⁴NO₂ ist, mit der Maßgabe, daß R³ ein Hydrocarbylrest mit 1 bis 20 Kohlenstoffatomen sein kann, wenn R² -R⁴CN ist,
n eine ganze Zahl mit einem Wert von 1 bis 50 ist,
der Rest R⁴ ein Hydrocarbylenrest mit 1 bis 20 Kohlenstoffatomen ist,
der Rest R⁵ ein Wasserstoffatom, ein Hydrocarbylrest mit 1 bis 7 Kohlenstoffatomen oder R⁷C(O)- ist, wobei der Rest R⁷ ein Hydrocarbylrest mit 1 bis 20 Kohlenstoffatomen ist, und
der Rest R⁶ ein Wasserstoffatom oder ein Hydrocarbylrest mit 1 bis 7 Kohlenstoffatomen ist,
umfassend das Mischen von (A) und (B).

2. Verfahren nach Anspruch 1, in dem die flüssige Zusammensetzung umfaßt 70 bis 99 Gew.-% des fluorhaltigen Kohlenwasserstoffs (A) und 1 bis 30 Gew.-% des löslichen organischen Schmiermittels (B).

3. Verfahren nach Anspruch 1, in dem die flüssige Zusammensetzung umfaßt 70 bis 99 Gew.-% des fluorhaltigen Kohlenwasserstoffs (A), wobei (A) 2 Kohlenstoffatome enthält, und
1 bis 30 Gew.-% des löslichen organischen Schmiermittels (B).

4. Verfahren nach einem der vorstehenden Ansprüche, in dem der Fluorkohlenwasserstoff (A) 1,1,1,2-Tetrafluorethan ist.

5. Verfahren nach einem der vorstehenden Ansprüche, in dem das Schmiermittel (B) die allgemeine Formel I hat und R² ein Alkylrest ist.

6. Verfahren nach einem der Ansprüche 1 bis 4, in dem das Schmiermittel die allgemeine Formel I hat und R² die allgemeine Formel R⁵OCH₂-, wobei der Rest R⁵ ein Alkylrest mit 1 bis 7 Kohlenstoffatomen oder R⁷C(O)- ist, wobei der Rest R⁷ ein Alkylrest mit 1 bis 7 Kohlenstoffatomen ist.

7. Verfahren nach einem der Ansprüche 1 bis 4, in dem das Schmiermittel die allgemeine Formel I hat und der Rest R² -CF₃ ist.

8. Verfahren nach einem der Ansprüche 1 bis 4, in dem das Schmiermittel (B) die allgemeine Formel II hat.

9. Verfahren nach Anspruch 8, in dem der Rest R² ein Wasserstoffatom oder ein Alkylrest mit 1 bis 7 Kohlenstoffatomen ist.

10. Verfahren nach Anspruch 8, in dem der Rest R² -R⁴CN und der Rest R³ ein Hydrocarbylrest ist.

11. Verfahren nach einem der vorstehenden Ansprüche, in dem das Schmiermittel keine acetylenischen und aromatischen Reste hat.

12. Verfahren zur Herstellung einer flüssigen Zusammensetzung, umfassend
(A) 70 bis 99 Gew.-% 1,1,1,2-Tetrafluorethan, und
(B) 1 bis 30 Gew.-% eines löslichen organischen Schmiermittels ohne acetylenische und aromatische Reste, und umfassend mindestens eine Carbonsäure-Ester-Verbindung der allgemeinen Formel
RO(R¹O)ₙC(O)R² (I)
in der der Rest R ein Hydrocarbylrest mit 1 bis 20 Kohlenstoffatomen, der Rest R¹ ein Alkylenrest mit 1 bis 3 Kohlenstoffatomen, der Rest R² ein Wasserstoffatom, ein Alkylrest mit 1 bis 7 Kohlenstoffatomen, ein Alkoxymethylenrest oder -R⁴CN ist, wobei der Rest R⁴ ein Alkylenrest mit 1 bis 20 Kohlenstoffatomen ist, und
n eine ganze Zahl mit einem Wert von 1 bis 20 ist,
umfassend das Mischen von (A) und (B).

13. Verfahren nach Anspruch 12, in dem der Rest R² ein Wasserstoffatom oder ein Alkylrest mit 1 bis 7 Kohlenstoffatomen ist.

14. Verfahren nach Anspruch 12, in dem der Rest R² -CF₃ ist.

15. Verfahren nach einem der Ansprüche 12 bis 14, in dem der Rest R¹ ein Methylen- oder Ethylenrest ist.

16. Verfahren nach einem der Ansprüche 12 bis 14, in dem der Hydrocarbylrest R und/oder der Hydrocarbylenrest R¹ verzweigtkettige Alkylreste und/oder verzweigtkettige Alkylenreste sind.

17. Verfahren zur Herstellung einer flüssigen Zusammensetzung, umfassend
(A) 70 bis 99 Gew.-% 1,1,1,2-Tetrafluorethan, und
(B) 1 bis 30 Gew.-% mindestens einer Carbonsäure-Ester-Verbindung der allgemeinen Formel
R³OC(O)R² (II)
in der der Rest R² ein Wasserstoffatom, ein Alkylrest mit 1 bis 10 Kohlenstoffatomen, ein niederer Alkoxymethylenrest,
-CF₃, R⁴NO₂, R⁷C(O)OCH₂- oder -R⁴CN ist, und
der Rest R³ -R⁴CF₃, -R⁴CN oder -R⁴NO₂ ist, wobei der Rest R⁴ ein Alkylenrest mit 1 bis 10 Kohlenstoffatomen ist, und der Rest R⁷ ein Hydrocarbylrest mit 1 bis 20 Kohlenstoffatomen ist,
umfassend das Mischen von (A) und (B).

18. Verfahren nach Anspruch 17, in dem der Rest R² ein Wasserstoffatom oder ein Alkylrest mit 1 bis 7 Kohlenstoffatomen ist.

19. Verfahren nach Anspruch 17, in dem der Rest R² -CF₃ ist.

20. Verfahren nach einem der Ansprüche 17 bis 19, in dem der Rest R³ -R⁴CN oder -R⁴NO₂ ist, wobei der Rest R⁴ ein verzweigter Alkylenrest ist.

21. Verfahren nach Anspruch 17, in dem der Alkylrest R² und der Alkylenrest R⁴ verzweigtkettige Alkyl- oder verzweigtkettige Alkylenreste sind.

## Revendications (Revendications pour l'(les) Etat(s) contractant(s) suivant(s): AT, BE, CH, DE, FR, GB, IT, LI, LU, NL, SE)

1. Une composition liquide comportant
(A) une quantité prépondérante (50 à 99% en poids) d'un hydrocarbure renfermant du fluor, qui contient un ou deux atomes de carbone, et renfermant uniquement du carbone, de l'hydrogène et du fluor et
(B) une quantité plus faible d'un lubrifiant organique soluble, comportant au moins un composé du type ester carboxylique, caractérisé par les formules:
RO(R¹O)ₙC(O)R² (I)
et
R³OC(O)R² (II)
dans lesquelles R est un groupe hydrocarbyle renfermant de 6 à 50 atomes de carbone,
R¹ est un groupe hydrocarbylène renfermant de 1 à 7 atomes de carbone,
R² est H, un groupe hydrocarbyle renfermant de 1 à 20 atomes de carbone, -CF₃, -R⁴CN, -R⁴- NO₂, ou R⁵OCH(R⁶)-,
R³ est un groupe -R⁴CF₃, -R⁴CN ou -R⁴NO₂ sous la condition que R³ puisse être un groupe hydrocarbyle renfermant de 1 à 20 atomes de carbone lorsque R² est -R⁴CN,
n est un nombre entier de 1 à 50,
R⁴ est un groupe hydrocarbylène renfermant de 1 à 20 atomes de carbone,
R⁵ est H ou un groupe hydrocarbyle renfermant de 1 à 7 atomes de carbone ou R⁷C(O)- où R⁷ est un groupe hydrocarbyle renfermant de 1 à 20 atomes de carbone, et
R⁶ est H ou un groupe hydrocarbyle renfermant de 1 à 7 atomes de carbone.

2. Une composition liquide de la revendication 1, comportant de 70 à 99% en poids d'un hydrocarbure (A) renfermant du fluor et de 1 à 30 en poids du lubrifiant organique soluble (B).

3. Une composition liquide de la revendication 1, comportant de 70 à 99% en poids de l'hydrocarbure renfermant du fluor (A), dans lequel (A) renferme deux atomes de carbone et
de 1 à 30% en poids du lubrifiant organique soluble (B).

4. Une composition liquide de l'une quelconque des revendications précédentes, dans laquelle le fluorohydrocarbure (A) est du 1,1,1,2-tétrafluoroéthane.

5. Une composition liquide de l'une quelconque des revendications précédentes, dans laquelle le lubrifiant (B) est caractérisé par la formule I et R² est un groupe alkyle.

6. Une composition liquide de l'une quelconque des revendications 1 à 4, dans laquelle le lubrifiant est caractérisé par la formule I et R² est caractérisé par la formule R⁵OCH₂- dans laquelle R⁵ est un groupe alkyle renfermant de 1 à 7 atomes de carbone ou bien R⁷C(O)- où R⁷ est un groupe alkyle renfermant de 1 à 7 atomes de carbone.

7. Une composition liquide de l'une quelconque des revendications 1 à 4, dans laquelle le lubrifiant est caractérisé par la formule I et R² est -CF₃.

8. Une composition liquide de l'une quelconque des revendications 1 à 4, dans laquelle le lubrifiant (B) est caractérisé par la formule II.

9. Une composition liquide de la revendication 8, dans laquelle R² est H ou un groupe alkyle renfermant de 1 à 7 atomes de carbone.

10. Une composition liquide de la revendication 8, dans laquelle R² est -R⁴CN et R³ est un groupe hydrocarbyle.

11. Une composition liquide de l'une quelconque des revendications précédentes, dans laquelle le lubrifiant est exempt d'insaturation acétylénique et aromatique.

12. Une composition liquide comportant:
(A) de 70 à 99% en poids de 1,1,1,2-tétrafluoroéthane, et
(B) de 1 à 30% en poids d'un lubrifiant organique soluble, dépourvu d'insaturation acétylénique et aromatique et comportant au moins un composé de type ester carboxylique caractérisé par la formule
RO(R¹O)ₙC(O)R² (I)
dans laquelle R est un groupe hydrocarbyle renfermant de 1 à 20 atomes de carbone, R¹ est un groupe alkylène renfermant de 1 à 7 atomes de carbone, R² est de l'hydrogène, un groupe alkyle renfermant de 1 à 7 atomes de carbone, un groupe alcoxy-méthylène, ou bien un groupe -R⁴CN dans lequel R⁴ est un groupe alkylène renfermant de 1 à 20 atomes de carbone, et
n est un nombre entier de 1 à 20.

13. Une composition liquide de la revendication 12, dans laquelle R² est H ou un groupe alkyle renfermant de 1 à 7 atomes de carbone.

14. Une composition liquide de la revendication 12, dans laquelle R² est -CF₃.

15. Une composition liquide de l'une quelconque des revendications 12 à 14, dans laquelle R¹ est un groupe méthylène ou éthylène.

16. Une composition liquide de l'une quelconque des revendications 12 à 14, dans laquelle le groupe hydrocarbyle R et/ou le groupe hydrocarbylène R¹ sont des groupes alkyle à chaîne ramifiée et/ou des groupes alkylène à chaîne ramifiée.

17. Une composition liquide comportant
(A) de 70 à 99% en poids de 1,1,1,2-tétrafluoroéthane, et
(B) de 1 à 30% en poids d'au moins un composé de type ester carboxylique, caractérisé par la formule
R³OC(O)R² (II)
dans laquelle R² est H, un groupe alkyle renfermant de 1 à 10 atomes de carbone, un groupe alcoxyméthylène inférieur, -CF₃, -R⁴NO₂, R⁷C(O)OCH₂-, ou -R⁴CN, et
R³ est un groupe -R⁴CF₃, -R⁴CN ou -R⁴NO₂, dans lequel R⁴ est un groupe alcylène renfermant de 1 à 10 atomes de carbone et R⁷ est un groupe hydrocarbyle renfermant de 1 à 20 atomes de carbone.

18. Une composition de la revendication 17, dans laquelle R² est H ou un groupe alkyle renfermant de 1 à 7 atomes de carbone.

19. Une composition liquide selon la revendication 17 dans lequel R² est CF₃.

20. Une composition liquide de l'une quelconque des revendications 17 à 19, dans laquelle R¹ est -R⁴CN ou R⁴NO₂ où R⁴ est un groupe alkylène ramifié.

21. Une composition liquide de la revendication 17, dans laquelle le groupe alkyle R² et le groupe alcylène R⁴ sont des groupes alkyle à chaîne ramifiée ou des groupes alcylène à chaîne ramifiée.

## Revendications (Revendications pour l'(les) Etat(s) contractant(s) suivant(s): ES)

1. Un procédé pour préparer une composition liquide comportant:
(A) une quantité prépondérante (50 à 99% en poids) d'un hydrocarbure renfermant du fluor, qui contient un ou deux atomes de carbone, et renfermant uniquement du carbone, de l'hydrogène et du fluor et
(B) une quantité plus faible d'un lubrifiant organique soluble, comportant au moins un composé du type ester carboxylique, caractérisé par les formules:
RO(R¹O)ₙC(O)R² (I)
et
R³OC(O)R² (II)
dans lesquelles R est un groupe hydrocarbyle renfermant de 6 à 50 atomes de carbone,
R¹ est un groupe hydrocarbylène renfermant de 1 à 7 atomes de carbone,
R² est H, un groupe hydrocarbyle renfermant de 1 à 20 atomes de carbone, -CF₃, -R⁴CN, -R⁴- NO₂, ou R⁵OCH(R⁶)-,
R³ est un groupe -R⁴CF₃, -R⁴CN ou -R⁴NO₂ sous la condition que R³ puisse être un groupe hydrocarbyle renfermant de 1 à 20 atomes de carbone lorsque R² est -R⁴CN,
n est un nombre entier de 1 à 50,
R⁴ est un groupe hydrocarbylène renfermant de 1 à 20 atomes de carbone,
R⁵ est H ou un groupe hydrocarbyle renfermant de 1 à 7 atomes de carbone ou R⁷C(O)- où R⁷ est un groupe hydrocarbyle renfermant de 1 à 20 atomes de carbone, et
R⁶ est H ou un groupe hydrocarbyle renfermant de 1 à 7 atomes de carbone, selon lequel on mélange (A) et (B).

2. Un procédé de la revendication 1, dans lequel la composition liquide comporte de 70 à 99% en poids d'un hydrocarbure (A) renfermant du fluor et de 1 à 30 en poids du lubrifiant organique soluble (B).

3. Un procédé de la revendication 1, dans lequel la composition liquide comporte de 70 à 99% en poids de l'hydrocarbure renfermant du fluor (A), dans lequel (A) renferme deux atomes de carbone et
de 1 à 30% en poids du lubrifiant organique soluble (B).

4. Un procédé selon l'une quelconque des revendications précédentes, dans lequel le fluorohydrocarbure (A) est du 1,1,1,2-tétrafluoroéthane.

5. Un procédé selon l'une quelconque des revendications précédentes, dans lequel le lubrifiant (B) est caractérisé par la formule I et R² est un groupe alkyle.

6. Un procédé selon l'une quelconque des revendications 1 à 4, dans lequel le lubrifiant est caractérisé par la formule I et R² est caractérisé par la formule R⁵OCH₂- dans laquelle R⁵ est un groupe alkyle renfermant de 1 à 7 atomes de carbone ou bien R⁷C(O)- où R⁷ est un groupe alkyle renfermant de 1 à 7 atomes de carbone.

7. Un procédé selon l'une quelconque des revendications 1 à 4, dans laquelle le lubrifiant est caractérisé par la formule I et R² est -CF₃.

8. Un procédé selon l'une quelconque des revendications 1 à 4, dans lequel le lubrifiant (B) est caractérisé par la formule II.

9. Un procédé de la revendication 8, dans lequel R² est H ou un groupe alkyle renfermant de 1 à 7 atomes de carbone.

10. Un procédé de la revendication 8, dans lequel R² est -R⁴CN et R³ est un groupe hydrocarbyle.

11. Un procédé de l'une quelconque des revendications précédentes, dans lequel le lubrifiant est exempt d'insaturation acétylénique et aromatique.

12. Un procédé pour préparer une composition liquide comportant:
(A) de 70 à 99% en poids de 1,1,1,2-tétrafluoroéthane, et
(B) de 1 à 30% en poids d'un lubrifiant organique soluble, dépourvu d'insaturation acétylénique et aromatique et comportant au moins un composé de type ester carboxylique caractérisé par la formule
RO(R¹O)ₙC(O)R² (I)
dans laquelle R est un groupe hydrocarbyle renfermant de 1 à 20 atomes de carbone, R¹ est un groupe alkylène renfermant de 1 à 7 atomes de carbone, R² est de l'hydrogène, un groupe alkyle renfermant de 1 à 7 atomes de carbone, un groupe alcoxy-méthylène, ou bien un groupe -R⁴CN dans lequel R⁴ est un groupe alkylène renfermant de 1 à 20 atomes de carbone, et
n est un nombre entier de 1 à 20, selon lequel on mélange (A) et (B).

13. Un procédé de la revendication 12, dans lequel R² est H ou un groupe alkyle renfermant de 1 à 7 atomes de carbone.

14. Un procédé de la revendication 12, dans lequel R² est -CF₃.

15. Un procédé de l'une quelconque des revendications 12 à 14, dans lequel R¹ est un groupe méthylène ou éthylène.

16. Un procédé de l'une quelconque des revendications 12 à 14, dans lequel le groupe hydrocarbyle R et/ou le groupe hydrocarbylène R¹ sont des groupes alkyle à chaîne ramifiée et/ou des groupes alkylène à chaîne ramifiée.

17. Un procédé pour préparer une composition liquide comportant
(A) de 70 à 99% en poids de 1,1,1,2-tétrafluoroéthane, et
(B) de 1 à 30% en poids d'au moins un composé de type ester carboxylique, caractérisé par la formule
R³OC(O)R² (II)
dans lequel R² est H, un groupe alkyle renfermant de 1 à 10 atomes de carbone, un groupe alcoxyméthylène inférieur, -CF₃, -R⁴NO₂, R⁷C(O)OCH₂-, ou -R⁴CN, et
R³ est un groupe -R⁴CF₃, -R⁴CN ou -R⁴NO₂, dans lequel R⁴ est un groupe alcylène renfermant de 1 à 10 atomes de carbone et R⁷ est un groupe hydrocarbyle renfermant de 1 à 20 atomes de carbone, selon lequel on mélange (A) et (B).

18. Un procédé de la revendication 17, dans lequel R² est H ou un groupe alkyle renfermant de 1 à 7 atomes de carbone.

19. Un procédé selon la revendication 17 dans lequel R² est CF₃.

20. Un procédé de l'une quelconque des revendications 17 à 19, dans lequel R¹ est -R⁴CN ou R⁴NO₂ où R⁴ est un groupe alkylène ramifié.

21. Un procédé de la revendication 17, dans lequel le groupe alkyle R² et le groupe alcylène R⁴ sont des groupes alkyle à chaîne ramifiée ou des groupes alcylène à chaîne ramifiée.
